# FASCICULE DE BREVET EUROPEEN

(11) **EP 2 782 832 B1**
(45) Date de publication et mention de la délivrance du brevet: **06.04.2016**
(21) Numéro de dépôt: 12806565.3
(22) Date de dépôt: 23.11.2012
(51) Int. Cl.: B64D 41/00

(54) **PROCÉDÉ ET SYSTÈME DE RÉGULATION DE PUISSANCE EN CAS DE DÉFAILLANCE D'AU MOINS UN MOTEUR D'AÉRONEF**
VERFAHREN UND SYSTEM ZUR LEISTUNGSREGELUNG IM FALLE DES VERSAGENS EINES FLUGZEUGMOTORS
METHOD AND SYSTEM FOR REGULATING POWER IN THE EVENT OF AT LEAST ONE AIRCRAFT ENGINE FAILURE

(30) Priorité: 25.11.2011 FR 1160785
(43) Date de publication de la demande: 01.10.2014
(73) Titulaire: Turbomeca, 64510 Bordes (FR)
(72) Inventeur: PRESSE, Jean-Michel, F-64320 Aressy (FR)
(74) Mandataire: Gevers & Orès
(86) Numéro de dépôt international: PCT/FR2012/052715
(87) Numéro de publication internationale: WO 2013/076434

(56) Documents cités:
- EP-A2- 2 347 956
- US-A- 4 684 081
- US-A- 5 161 363
- US-A- 5 343 778
- US-B1- 6 316 841

## Description

### DOMAINE TECHNIQUE

L'invention concerne un procédé et un système de régulation de puissance en cas de défaillance d'au moins un moteur d'aéronef.

L'invention s'applique à la motorisation des aéronefs, c'est-à-dire essentiellement aussi bien à la motorisation d'avions (réacteurs, turboréacteurs, turbopropulseurs), qu'à la motorisation d'hélicoptères (turbomoteur).

Un moteur d'aéronef comporte classiquement, et de manière simplifiée, un ensemble de compresseur-chambre de combustion-turbine formant un générateur de gaz. Après leur combustion, les gaz chauds comprimés sont détendus dans la turbine qui entraîne mécaniquement le compresseur via un arbre haute pression (HP en abrégé) pour former le corps HP. Ces gaz fournissent alors la génération de propulsion ainsi que, en condition de fonctionnement nominal AEO (initiales de « all engines operating » en terminologie anglaise, à savoir « tous les moteurs opérationnels ») les générations non propulsives, à savoir électrique et/ou pneumatique.

L'énergie ainsi fournie au cours du temps correspondant à un niveau de transmission de puissance instantanée. Dans le cas d'un avion, l'énergie de propulsion est générée sous la forme de poussée soit directement (dans les réacteurs) soit indirectement via un corps basse pression BP (dans les turboréacteurs à soufflante ou les turbopropulseurs à hélice). Dans le cas d'un hélicoptère, l'énergie de propulsion est transmise à la voilure tournante par l'intermédiaire d'une boîte de transmission de puissance (connue généralement sous l'appellation BTP).

En régime de défaillance d'un moteur (en abrégé OEI, initiales de « One Engine Inoperative » en terminologie anglaise, à savoir « un moteur non opérationnel »), le ou les moteur(s) qui reste(nt) opérationnel(s) assurent le maintien de la propulsion et des générations non propulsives de l'aéronef. Dans le cas d'aéronef « tout électrique » ou principalement électrique, la génération pneumatique est alimenté électriquement à partir de la génération électrique via des convertisseurs appropriés.

### ÉTAT DE LA TECHNIQUE

De manière générale, en cas de perte d'un moteur de propulsion, c'est-à-dire en régime OEI, le ou les moteur(s) qui reste(nt) opérationnel(s) compense(nt) au moins partiellement cette perte pour maintenir à la fois la propulsion de l'aéronef et les générations non propulsives. Cependant, bien que les moteurs soient surdimensionnés pour fournir un excès de puissance dans des conditions particulières, par exemple en régime OEI, il apparaît que cette puissance se trouve insuffisante pour assurer à la fois la propulsion, le rétablissement des conditions de vol acceptables dans toutes les phases de vol, ainsi que tous les prélèvements non propulsifs nécessaires aux consommateurs (conditionnement d'air de la cabine, train d'atterrissage, etc.). En particulier, l'importance des prélèvements peut limiter les capacités d'accélération pendant les phases transitoires.

Une solution est d'aider au moins partiellement la motorisation qui reste opérationnelle ou « survivante » par l'APU de l'aéronef. Les APU (initiales de « Auxiliary Power Unit », en terminologie anglaise, à savoir « unité ou groupe de puissance auxiliaire) équipent habituellement les aéronefs pour alimenter au sol les différents équipements consommateurs (électriques, pneumatiques et hydrauliques), et démarrer les moteurs principaux. Un APU est représenté par example dans le document US 4,684,081.

Un APU est un turboréacteur « simplifié » : il se compose classiquement d'un générateur de gaz et de moyens d'entraînement direct des équipements de l'aéronef (compresseur de charge, générateur électrique et/ou démarreur/générateur électrique, etc.), ou via une boîte de transfert de puissance, avec une adaptation des vitesses de rotation. Un prélèvement d'air à la sortie du compresseur de charge ou du compresseur d'entrée sert au démarrage pneumatique des moteurs principaux.

Lorsqu'un moteur est en panne, certains APU sont suffisamment sécurisés pour pouvoir être redémarrés pendant le vol afin de tenter de redémarrer le moteur défaillant et/ou de fournir une partie de l'énergie électrique aux équipements en vol.

Cependant, l'utilisation d'un APU en vol nécessite son propre redémarrage et une redescente de l'aéronef en dessous d'une altitude déterminée pour lui permettre de générer suffisamment de puissance pneumatique. Si l'aéronef doit rester au-dessus de cette altitude, par exemple du fait des conditions de vol, l'énergie pneumatique reste fournie totalement par le(s) moteur(s) survivant(s).

L'intervention de l'APU génère ainsi de nombreux inconvénients : le redémarrage de l'APU nécessite une charge de travail et de surveillance supplémentaire à un moment où le pilote doit par ailleurs conserver toute sa disponibilité ; l'APU a un temps de redémarrage d'environ 90 secondes, ce qui fait que son aide n'est pas immédiate ; plan de vol modifié, avec un plafond plus bas que le maximum autorisé en cas de perte d'un moteur principal, pour permettre à l'APU de générer suffisamment de puissance pneumatique; si l'aéronef doit rester au-dessus d'une certaine altitude, l'APU ne fournit que de l'énergie électrique et le(s) moteur(s) survivant(s) n'est (ne sont) pas totalement délesté(s) des prélèvements d'énergie.

### EXPOSÉ DE L'INVENTION

L'invention vise à supprimer ces inconvénients. Pour ce faire, l'apport de puissance est fourni par une génération supplémentaire de puissance non propulsive, fonctionnant en permanence, et provenant d'un groupe de puissance principal (GPP en abrégé) supplémentaire de classe moteur. Un groupe de puissance est dit de classe moteur lorsque l'architecture et les performances de la puissance générée est apte à la certification moteur d'utilisation pendant toutes les phases de vol, au même titre qu'une génération de puissance fournie par un moteur principal d'aéronef. Un GPP comporte un générateur de gaz, dimensionné de manière intermédiaire entre un APU conventionnel et un moteur principal d'avion.

La génération de puissance supplémentaire de type GPP est calculée pour qu'elle puisse prendre à sa charge sans délai tout ou partie des besoins énergétiques non propulsifs de l'aéronef. L'utilisation d'un GPP en permanence est adaptable, que les besoins soient pneumatiques et électriques ou essentiellement électriques, par exemple lorsque le conditionnement d'air cabine est alimenté électriquement. De plus, comparé à un équipement APU, l'altitude en vol d'un avion en régime OEI peut être accrue jusqu'au plafond maximal autorisé pour le régime OEI lorsque l'avion est équipé d'un groupe GPP.

Plus précisément, la présente invention a pour objet un procédé de régulation de puissance en cas de défaillance d'au moins un moteur d'aéronef. L'aéronef comporte une unité de traitement numérique de données centrale délivrant une fonction d'urgence apte à déclencher un signal d'urgence. Le procédé consiste alors, à l'aide d'un groupe de puissance principale de classe moteur dit GPP géré par une fonction de contrôle et de surveillance et fonctionnant en permanence en vol en prenant en charge une partie de la puissance non propulsive totale nominale de l'aéronef, à accroître ses limites de fonctionnement pour pouvoir fournir quasi instantanément sur réception du signal d'urgence des puissances non propulsives augmentées selon au moins trois régimes d'urgence lors de ladite défaillance moteur en réponse à des consommations supplémentaires prélevées sur le GPP. Chaque régime d'urgence dispose d'une durée maximale d'intervention reportable d'un régime sur l'autre et pouvant être répartie en plusieurs séquences alternées. Ces régimes comprennent au moins, classés selon un ordre de niveau de puissance décroissant : un régime dit de super-urgence de prise en charge de tout ou partie de la puissance non propulsive augmentée d'un surcroît de puissance, un régime dit d'urgence maximale, de prise en charge de tout ou partie de la puissance non propulsive, et un régime dit intermédiaire d'urgence de prise en charge d'une fraction minimale de puissance non propulsive correspondant au reste de puissance disponible en continu jusqu'à la fin du vol. La fonction de contrôle et surveillance du groupe GPP compte le temps écoulé pour chaque régime d'urgence, en informe l'unité de traitement centrale en liaison avec une émission d'alerte en cas de dépassement des durées maximales de fonctionnement allouées à chaque régime d'urgence. De plus, la fonction d'urgence ajuste les prélèvements de puissance non propulsive de l'aéronef entre les moteurs principaux et le groupe GPP soit automatiquement soit par un ordre pilote, en fonction de ces informations de temps de régime écoulé et d'avertissement de dépassement de limite d'utilisation d'un régime d'urgence.

Avantageusement, les durées d'intervention des régimes sont utilisées en fonction de la gestion de la perte d'un ou de plusieurs moteurs. Un régime de puissance inférieure peut être utilisé à la place d'un régime disponible de puissance supérieure pendant une durée déterminée : le régime de super-urgence n'est atteint qu'en phase de tentative de redémarrage d'un moteur, le régime d'urgence maximale est atteint en cas de défaillance d'un ou de plusieurs moteurs, par exemple en phase de récupération de trajectoire et/ou d'altitude de l'aéronef, tout en fournissant simultanément tout ou partie de la puissance non propulsive de l'aéronef. Le régime de puissance intermédiaire d'urgence peut n'intervenir qu'en phase de maintien d'une fraction de puissance non propulsive en cas de défaillance définitive d'au moins un moteur pendant une durée de fin de vol, en délestant au maximum le ou les moteurs restés opérationnels.

En particulier, le régime de puissance intermédiaire d'urgence est compatible avec des navigations réglementées selon des routes aériennes éloignées d'un aéroport de secours, en particulier en cas de détresse : il s'agit de la réglementation internationale ETOPS (initiales de « Extended-Range Twin-Engine Operations Performance Standard», c'est-à-dire « Standards de domaines étendus d'exploitation d'opérations pour biréacteurs ») ou de la future réglementation s'appliquant à tous les types d'avion.

Selon des modes de mises en oeuvre particuliers, en cas de défaillance d'un seul des moteurs d'un aéronef qui fournissent de la puissance non propulsive lorsqu'ils sont opérationnels, un mode de régulation consiste à ne solliciter que le régime intermédiaire d'urgence du groupe GPP pour compenser l'absence de contribution du moteur défaillant (M1) alors que le (ou les) moteur(s) opérationnel(s) n'est pas (ne sont pas) délesté(s) de sa (leur) contribution à la puissance non propulsive totale.

Alternativement, trois régimes peuvent être successivement et alternativement sollicités dans un autre mode de régulation, avec le délestage du (des) moteur(s) opérationnel(s) de sa (leur) contribution à la puissance non propulsive tant que le moteur défaillant n'a pas redémarré, à savoir : une séquence alternative de régime d'urgence maximale, avec une prise en charge au moins partielle de la puissance non propulsive, suivie d'une demande de puissance correspondant au régime de super-urgence lors d'une tentative de redémarrage du moteur défaillant pendant au plus toute la durée disponible dédiée à ce régime, avant de revenir au régime d'urgence maximale avec une même prise en charge totale de la puissance non propulsive, ce dernier régime pouvant durer jusqu'à épuisement de la durée disponible dédiée à ce régime.

Puis, en cas de redémarrage du moteur défaillant, la fonction d'urgence ajuste la puissance non propulsive entre les deux moteurs et le groupe GPP qui fonctionnent à nouveau au régime nominal de puissance non propulsive rétabli jusqu'à la fin du vol, avec une partie déterminée de cette puissance fournie par le groupe GPP et la partie complémentaire fournie par les deux moteurs (M1, M2). Alternativement, en cas de non redémarrage du moteur défaillant, la fonction d'urgence stoppe le délestage du moteur opérationnel, rétablissant alors sa contribution à la puissance non propulsive, soit automatiquement en fonction des données de vol soit sur ordre du pilote s'il estime que les conditions de vol le permettent, et sollicite le groupe GPP au régime de puissance intermédiaire jusqu'à la fin du vol.

Avantageusement, l'avion dispose ainsi de ressources supplémentaires avec le groupe GPP pour retrouver des conditions de vol acceptables par délestage temporaire du moteur qui reste opérationnel.

En cas de défaillance de deux moteurs, un mode de régulation réalisé par la fonction d'urgence consiste à solliciter la séquence alternative comme exposée ci-dessus, faisant intervenir le régime d'urgence maximale, suivi du régime de super-urgence lors de la tentative de redémarrage d'un moteur, avant de revenir au régime d'urgence maximale. Puis, en cas de redémarrage du moteur, la fonction d'urgence réoriente, soit sur ordre du pilote s'il estime que les conditions de vol le permettent, soit automatiquement en fonction des données de vol, une partie des consommateurs vers le moteur redémarré (M2) qui fournit sa part de puissance non propulsive et une autre partie des consommateurs vers le groupe GPP qui opère au régime d'urgence intermédiaire (RI) jusqu'à la fin du vol.

Alternativement, si le moteur ne redémarre pas, le régime de puissance maximale d'urgence est sollicité jusqu'à épuisement de sa durée d'intervention, puis la demande en puissance non propulsive est réduite par la fonction d'urgence afin de passer en régime d'urgence intermédiaire.

En option, lorsque toute la puissance non propulsive n'est fournie que par le groupe GPP en régime d'urgence intermédiaire, une turbine RAT (initiales de « Ram Air Turbine », à savoir « Turbine à air dynamique » en terminologie anglaise) peut fournir un complément de puissance non propulsive.

L'invention se rapporte également à un système de régulation de puissance en cas de défaillance d'au moins un moteur d'aéronef. Ce système comporte un centre de contrôle de vol dit contrôle avion équipé d'une unité de traitement numérique de données, un module de maintenance de l'aéronef et des modules de contrôle et de surveillance dit FADEC d'un groupe GPP et des moteurs. Le FADEC du groupe GPP est équipé de compteurs de temps d'écoulement de régimes d'urgence déclenchés par une fonction d'urgence de l'unité de traitement qui ajuste la fourniture de puissances non propulsives par le groupe GPP et les moteurs via leurs FADEC. Des liaisons bidirectionnelles relient le centre de contrôle avion aux FADEC et de ces FADEC au groupe GPP et aux moteurs, afin d'être aptes à gérer la demande des consommateurs en fonction desdits temps d'écoulement et des informations sur l'état des moteurs et du groupe GPP, fournies par les FADEC au module de maintenance et au pilote via l'unité de traitement.

Avantageusement, lesdits temps d'écoulement et informations sur les niveaux de puissance atteints et l'état des moteurs et du groupe GPP, fournies par les FADEC au module de maintenance via l'unité de traitement permettent une maintenance préventive optimisée et une planification facilitée des opérations de maintenance en cas d'endommagement du groupe GPP.

### PRÉSENTATION DES FIGURES

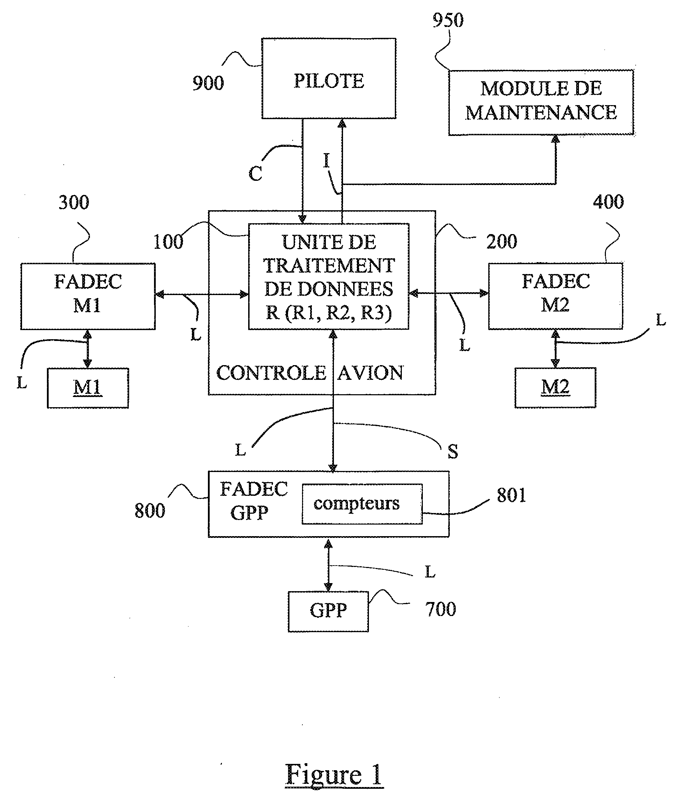

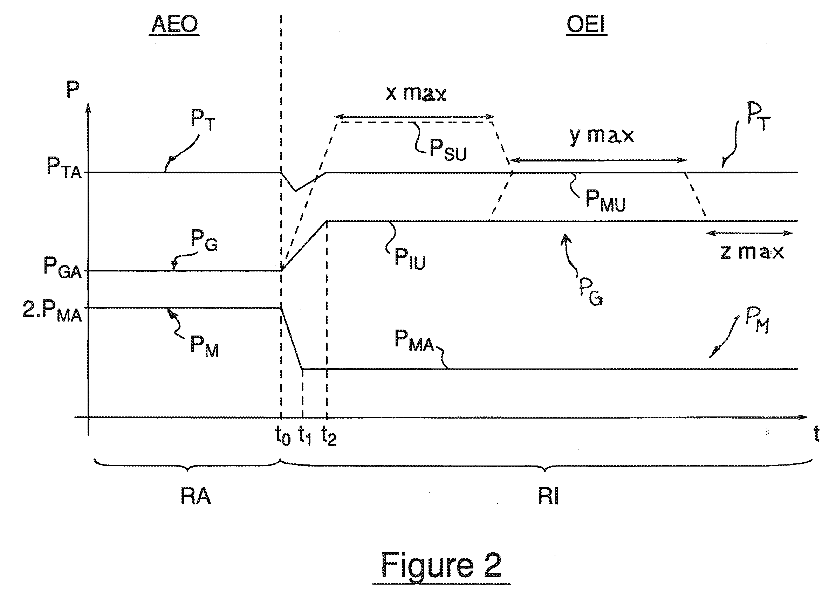

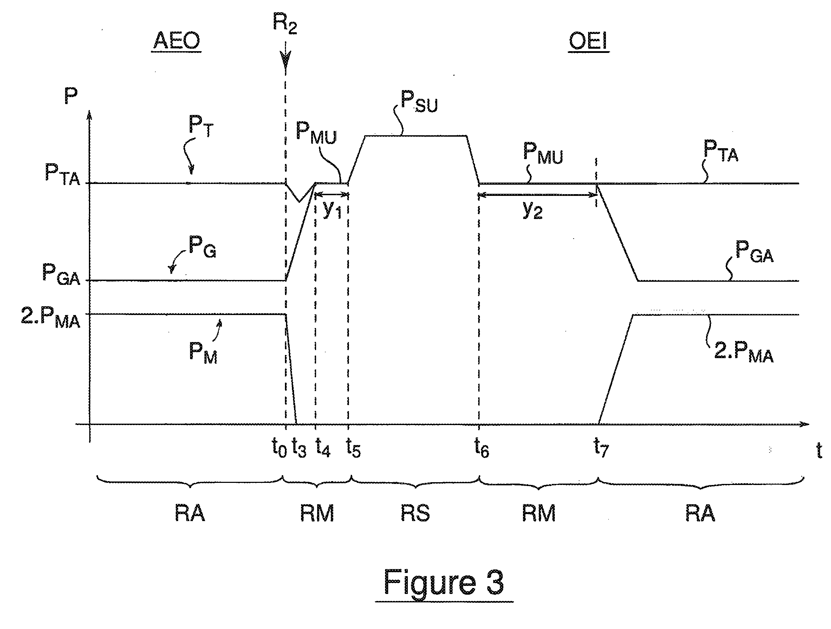

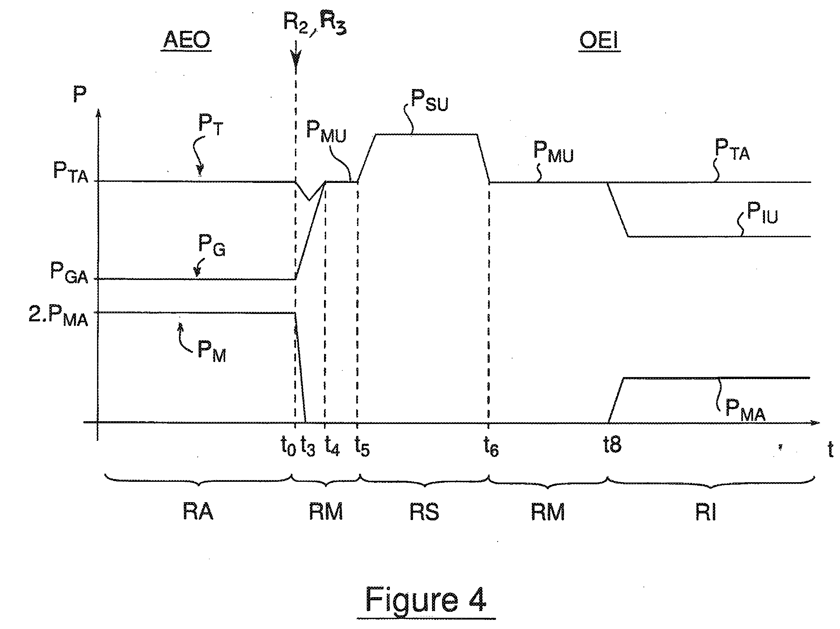

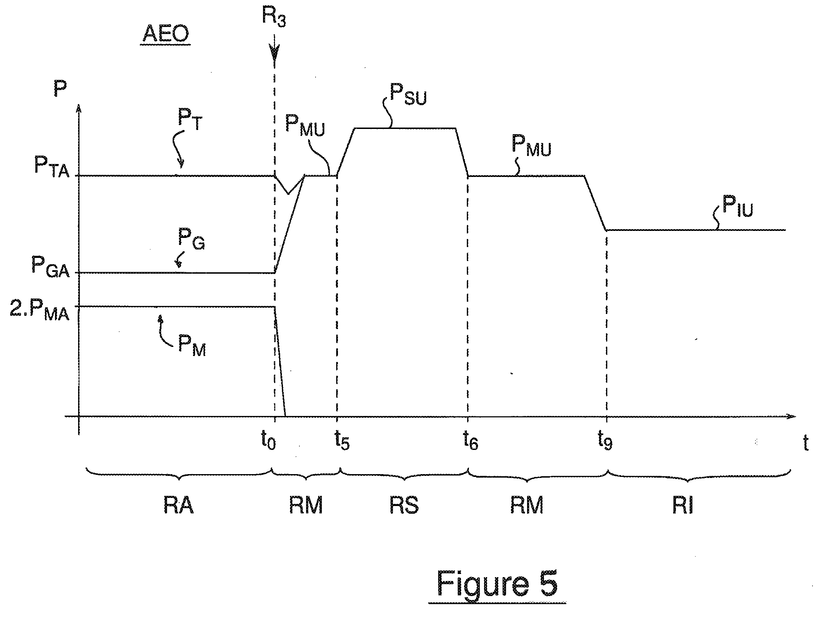

D'autres aspects, caractéristiques et avantages de l'invention apparaîtront dans la description non limitative qui suit, relative à des modes de réalisation particuliers, en référence aux dessins annexés qui représentent, respectivement :
- en figure 1, un organigramme des équipements interactifs d'un système de régulation selon l'invention ;
- en figure 2, un diagramme d'exemple de gestion des puissances non propulsives lors d'une régulation d'urgence selon l'invention dans le cas de la perte d'un moteur sans tentative de redémarrage de ce moteur ;
- en figure 3, un diagramme de cette gestion lors de la régulation précédente dans le cas de la perte d'un moteur et lorsque le moteur défaillant redémarre après une tentative de redémarrage ;
- en figure 4, un diagramme de la gestion d'urgence par la régulation précédente lorsque le moteur défaillant ne redémarre pas après la tentative ; ce diagramme illustre également la régulation d'urgence des puissances non propulsives dans le cas de la perte de deux moteurs avec redémarrage d'un moteur défaillant après une tentative ; et
- en figure 5, un diagramme de régulation en cas de perte de deux moteurs lorsque la tentative de redémarrage du moteur ne réussit pas.

### DESCRIPTION DETAILLEE DE MODES DE REALISATION

Dans toutes les figures 2 à 5, les diagrammes montrent l'évolution des puissances non propulsives P selon des régimes de gestion recouvrant les besoins en énergie électrique et pneumatique avion, en fonction du temps « t » de déroulement de vol d'un avion bimoteur. Différentes puissances non propulsives variables sont également indiquées sur l'axe du temps, dans des fenêtres temporaires correspondantes :
- la puissance non propulsive P_{M} fournie par la motorisation regroupant ici deux turboréacteurs, sous la dénomination de moteurs M1 et M2 ;
- la puissance P_{G} fournie par le groupe GPP présenté ci-dessus ; et
- la puissance non propulsive totale P_{T} fournie par les moteurs et le groupe GPP pour prendre en charge l'ensemble des besoins énergétiques (électrique et pneumatique).

En particulier, les puissances non propulsives en mode nominal des moteurs principaux (appelé mode « AEO », initiales de « All Engines Operative », qui signifie « tous les moteurs opérationnels » en terminologie anglaise) sont représentées : celle 2P_{MA} de la motorisation formée des moteurs principaux M1 et M2 (P_{MA} pour chacun de ces moteurs), ainsi que celle du groupe de puissance principal GPP notée P_{GA}.

Le groupe GPP est également susceptible de fournir différents niveaux de puissances supplémentaires correspondant à différents régimes d'urgence, successifs ou alternés selon les besoins, dans le cas de défaillance d'au moins un moteur principal. Les durées maximales de fonctionnement à chaque régime d'urgence sont cumulables. Le centre de contrôle comporte classiquement des moyens de mémorisation des données fournies, couplés à une unité de traitement numérique centrale de données, ainsi que des moyens de transmission de signaux de commande aux moteurs et au groupe GPP. Cette unité de traitement centrale gère également les consommateurs et les fournisseurs d'énergie.

Par exemple, l'organigramme de la figure 1 illustre le cheminement d'une régulation d'urgence « R », à l'image de chaque régulation d'urgence R1, R2 ou R3 décrite ci-dessous, portée par un signal d'urgence « S » et élaboré par une fonction d'urgence d'une unité de traitement numérique centrale de données 100. L'unité 100 est intégrée, dans cet exemple, au centre de contrôle dit contrôle avion 200. Les données se rapportent aux informations provenant des modules de contrôle et de surveillance dit « FADEC » 300 et 400 (initiales de « Full Authority Digital Engine Control ») des moteurs principaux M1 et M2 des moteurs principaux. Le FADEC d'un équipement est un module numérique qui peut asservir celui-ci sur toute sa plage de puissance. Le signal «S » de régulation d'urgence est transmis au groupe GPP 700 via son FADEC 800. Le FADEC 800 autorise le groupe GPP, sur réception du signal d'urgence, d'augmenter la puissance fournie par le groupe GPP. Le pilote 900 peut déclencher également des commandes « C » à l'unité de traitement 100, afin de modifier la répartition des prélèvements de puissance non propulsive entre les moteurs principaux M1 et M2 d'une part et le groupe GPP 700 d'autre part, en fonction des conditions de vol.

De plus, les FADEC 300, 400 et 800 sont aptes à fournir au pilote 900 et au module de maintenance de l'aéronef 950, via l'unité de traitement 100 du contrôle avion 200, des informations « I » concernant l'état des moteurs ainsi que du groupe GPP et de leurs capacités à fournir de la puissance non propulsive. Des liaisons « L » bidirectionnelles relient les différents équipements cités.

Les puissances supplémentaires pouvant être fournies par le groupe GPP sont représentées sur les diagrammes des figures 2 à 5, à savoir :
- une puissance de super urgence Psu qui permet la prise en charge de tout ou partie de la puissance non propulsive totale P_{T}, évitant ou minimisant ainsi le délestage des consommateurs de l'aéronef et, simultanément, suffisante à la tentative de redémarrage d'un moteur principal défaillant ;
- une puissance d'urgence maximale P_{MU} qui permet également la prise en charge de tout ou partie de la puissance non propulsive totale P_{T}, évitant ou minimisant ainsi le délestage des consommateurs de l'aéronef, mais sans tentative de redémarrage de moteur principal, et
- une puissance intermédiaire d'urgence P_{IU} qui permet la prise en charge d'une fraction de la puissance non propulsive totale et qui peut être fournie jusqu'à la fin du vol, par exemple dans les conditions ETOPS.

Les durées de fonctionnement aux différentes puissances d'urgence sont limitées pour rester compatibles avec la limite d'endommagement acceptable du groupe GPP. Mais ces durées sont cumulables. Ainsi, si le groupe GPP est sollicité seulement au niveau de la puissance d'urgence intermédiaire, le temps qu'il aurait pu consacrer à la fourniture de puissance supérieure se rajoute au temps maximum autorisé en régime d'urgence intermédiaire.

Dans un exemple de réalisation, la puissance P_{SU} atteint 130% de la puissance de fonctionnement nominal continu pendant xₘₐₓ = 1 minute, alors que la puissance P_{MU} se situe aux environs de 120% de la puissance de fonctionnement nominal continu pendant yₘₐₓ = 2 minutes, et la puissance P_{IU} ne dépasse pas 110% de la puissance de fonctionnement nominal continu pendant zₘₐₓ = 180 minutes. Ces durées maximales pendant lesquelles les différents régimes peuvent être sollicités, de manière continue ou alternée, sont conditionnées par le dimensionnement des moteurs. Dans un exemple de mise en oeuvre, les durées sont réparties sur 35 secondes de puissance P_{SU}, 2 minutes et 15 secondes de puissance P_{MU} (les 25 secondes non utilisées de puissance Psu restent exploitables en sus pour les puissances P_{MU} et/ou P_{IU}) et 110 minutes de puissance P_{IU}.

Les interventions de ces puissances supplémentaires sont détaillées ci-après en fonction des choix de délestage ou non du (ou des) moteur(s) « survivants » (restés opérationnels) selon différents modes de régulation en fonctionnement OEI. En particulier, un décomptage du temps dédié à chaque régime est effectué par des compteurs de temps 801 intégrés au FADEC 800 du groupe GPP 700. Ce décomptage permet de ne pas endommager le groupe GPP qui serait sinon sollicité pendant des durées prolongées dans des régimes de puissances extrêmes. Les puissances fournies par le groupe GPP sont, de plus, adaptées automatiquement par son FADEC suivant les demandes en énergie des consommateurs. Cette adaptation est transparente vis-à-vis du pilote.

Lors de la perte d'au moins un moteur, l'unité de traitement de données 200 transmet un signal d'urgence « S » au FADEC 800 du groupe GPP 700. Ce signal libère l'autorisation d'utilisation immédiate par le GPP des régimes RS, RM et RI correspondant respectivement à la délivrance de puissance Psu, P_{MU} et P_{IU}. Les régimes sont indiqués en abscisse dans la plage temporaire dédiée, pendant des durées déterminées en fonction des consommations sur le groupe GPP 700 qui, elles, dépendent de l'ajustement en répartissant la puissance non propulsive entre le groupe GPP et le(s) moteur(s) opérationnel(s). Cette répartition est imposée par l'unité de traitement 100 en fonction des priorités définies par l'avionneur ou selon les ordres du pilote.

Les priorités définies par l'avionneur peuvent être hiérarchisées, par exemple, selon les critères suivants :
- priorité absolue de la sécurité de vol : trajectoire de vol souhaitée non encore atteinte ou attitude dangereuse de l'aéronef nécessitant une disponibilité totale de la puissance propulsive du ou des moteur(s) resté(s) opérationnel(s), avec dépassement des limites de temps d'utilisation des régimes d'urgence du GPP si la sécurité de vol est en jeu ;
- priorité relative à la protection du matériel : respect des limites de temps d'utilisation des régimes d'urgence du GPP si la trajectoire de vol est à nouveau satisfaisante ;
- priorité concernant la consommation : optimisation de la consommation pour la fin du vol qui peut amener à éteindre certains consommateurs jugés non indispensables.

Avant l'émission du signal d'urgence « S », tous les moteurs sont opérationnels et les puissances non propulsives sont en mode nominal AEO, selon un régime de gestion nominale RA, avec la répartition suivante :
- la puissance 2P_{MA} fournie par la motorisation principale regroupant les moteurs M1 et M2, avec P_{MA} = 150 kW ;
- la puissance P_{GA} fournie par le groupe GPP, supérieure à la puissance 2P_{MA} fournie par la motorisation principale dans l'exemple de réalisation, par exemple P_{GA} = 500 kW ;
- la puissance non propulsive totale P_{TA} fournie par les moteurs et le groupe GPP pour prendre en charge l'ensemble des besoins énergétiques (électrique et pneumatique), cette puissance vérifie donc : P_{TA} = 2P_{MA} + P_{GA}.

Les figures 2 à 5, dont la description détaillée suit, se rapportent à des répartitions de puissance non propulsive lors de gestions d'urgence selon différents modes. La description ci-après fait également référence aux équipements, au pilote, aux régulations, aux signaux et aux liaisons selon l'organisation représentée en figure 1, en conservant les mêmes signes de référence. Il convient donc de se reporter également à la figure 1 et au texte en regard lors de ces évocations.

En référence à la figure 2, est représenté un diagramme de la gestion des puissances non propulsives P lors de la régulation d'urgence selon un mode R1. Ce mode est déclenché par l'émission du signal « S», à l'instant t₀, par l'unité de traitement 100 du centre de contrôle 200 dans le cas de défaillance du moteur gauche M1 et sans tentative de redémarrage de ce moteur.

Dans le cadre de ce mode de régulation R1, un régime d'urgence intermédiaire RI est directement et continûment requis jusqu'à la fin du vol, sans utiliser la puissance de super-urgence P_{SU} ni d'urgence maximale P_{MU}, qui restent potentiellement disponibles (en traits pointillés). Le groupe GPP 700 est ainsi sollicité pour fournir la puissance d'urgence intermédiaire P_{IU}, supérieure à la puissance nominale P_{GA}, mais inférieure à la puissance d'urgence maximale P_{MU}. Dans ce cas, le moteur survivant M2 n'est pas délesté de sa charge non propulsive, et continue à fournir sa part P_{MA} de puissance non propulsive.

La puissance intermédiaire P_{IU} fournie à compter de l'instant t₂ et la puissance non propulsive P_{MA} - fournie à compter de l'instant t₁ uniquement par le moteur droit M2 qui reste opérationnel - constituent alors la puissance non propulsive totale P_{T} dans cette phase de vol entre la réception du signal d'urgence « S » par le FADEC du groupe GPP 700 et la fin de vol. Cette puissance totale P_{T} est sensiblement égale à la puissance non propulsive totale P_{TA} en mode régime nominal RA. Le niveau de la puissance d'urgence P_{IU} fournie correspond ainsi à la prise en charge de la fraction de puissance non propulsive totale qu'est capable de fournir en continu le groupe GPP 700 jusqu'à la fin du vol dans les conditions ETOPS. La durée d'intervention du groupe GPP 700 au régime RI regroupe ainsi les durées d'intervention possible des régimes de super-urgence RS (xₘₐₓ) et d'urgence maximale RM (yₘₐₓ) au niveau de puissance intermédiaire P_{IU}, ainsi que celle (zₘₐₓ) dédiée au régime d'urgence intermédiaire RI.

La figure 3 illustre un diagramme de gestion des puissances non propulsives P lors d'une régulation d'urgence selon un mode R2. Ce mode est déclenché par l'émission du signal d'urgence « S », à l'instant t₀, par l'unité de traitement du centre de contrôle 200 dans le cas où, le moteur gauche M1 étant défaillant comme dans le cas précédent, une tentative de redémarrage de ce moteur est sollicitée.

Avant l'émission du signal d'urgence « S » à l'instant de l'arrêt du moteur gauche M1, les puissances non propulsives sont réparties dans le régime nominal RA en mode AEO selon la même configuration que dans le cas de la figure 2.

Dans le cadre de ce mode de régulation R2, le moteur droit M2, qui reste opérationnel, est délesté de sa charge non propulsive - avec un délestage complet à compter de l'instant t₃ - afin de disposer temporairement de plus de puissance propulsive. Le centre de contrôle avion 200 gère la commande de ce délestage conformément au mode de régulation d'urgence R2, via la fonction d'urgence. Cette fonction est fournie par un processeur programmé et intégré à l'unité de traitement du centre de contrôle avion.

Plus généralement, cette fonction génère les signaux d'urgence automatiquement et gère la répartition de puissance non propulsive entre GPP et moteur(s) opérationnel(s), soit automatiquement selon des choix prioritaires opérés initialement par l'avionneur et intégrés à la fonction d'urgence - comme dans l'exemple décrit ci-dessus -, soit sur intervention du pilote.

A la réception du signal d'urgence « S » par le FADEC du groupe GPP, le moteur resté opérationnel M2 est délesté et la puissance non propulsive est alors fournie en compensation par le groupe GPP de la manière suivante. La fonction d'urgence met d'abord le FADEC du groupe GPP en état d'alerte afin qu'il accroisse les limites de fonctionnement du GPP pour qu'il soit apte à subir une augmentation de charge imminente. L'unité de traitement 100 commute ensuite les moyens de transport de puissance du moteur M2 vers le groupe GPP selon les ordres du pilote ou des lois automatiques programmées. A l'instant t₃, la charge portée par le groupe GPP augmente brutalement. Afin de répondre à ce supplément de charge, le générateur de gaz du groupe GPP est accéléré. Le groupe GPP fournit alors plus d'énergie non propulsive que dans la phase antérieure. Le générateur de gaz du groupe GPP est ainsi accéléré jusqu'à atteindre à l'instant t₄ le niveau de régime maximal d'urgence RM de puissance P_{MU}. Ce niveau de puissance est apte à compenser le délestage du moteur M2 de la fourniture de puissance non propulsive et la défaillance du moteur M1. Dans ces conditions, toute la puissance non propulsive P_{T} est fournie par le groupe GPP à compter de l'instant t₃, dont le niveau P_{G}, ici P_{MU} entre les instants t₄ et t₅, est maintenu sensiblement au niveau nominal P_{TA} à compter de l'instant t₄.

Après une durée de temps y1 donnée de fonctionnement à ce régime maximal d'urgence RM (durée qui peut être réduite ou supprimée si nécessaire), par exemple égale à 10 secondes, le pilote commande à l'instant t₅ une tentative de redémarrage du moteur principal gauche M1 à l'unité de traitement du centre de contrôle. Le centre de contrôle 200 demande alors au FADEC 800 du groupe GPP 700 de passer en mode de démarrage du moteur M1. Le groupe GPP accélère encore son générateur de gaz pour disposer alors de la puissance de super-urgence P_{SU} comprenant la puissance nécessaire au redémarrage. Le groupe GPP atteint ainsi quasi-instantanément le régime de super-urgence RS dans lequel ce groupe fournit toute la puissance non propulsive au niveau nominale P_{TA} augmentée de la puissance de redémarrage du moteur gauche M1.

Le diagramme de la figure 3 correspond au cas où le moteur défaillant M1 redémarre suite à ladite tentative. Après avoir exploitée toute la puissance nécessaire au redémarrage pendant une durée x1 de 35 secondes, le groupe GPP 700 repasse à l'instant t₆ en régime maximal d'urgence RM correspondant à la puissance P_{MU}. Ce régime peut durer jusqu'à épuisement du reste y2 (égal à la différence (y - y1)) de la durée maximale « y » (2 minutes) dédiée à ce régime, augmentée du résiduel de temps (x - x1) autorisé mais non consommé au régime de super-urgence RS (de durée maximale « x » égale à 1 minute). Le régime maximal d'urgence RM peut donc durer pendant ((y + x) - (y1 + x1)) soit, dans l'exemple, 2 minutes et 15 secondes.

Mais, lorsque les conditions sont requises à l'instant t₇ pour que les moteurs principaux M1 et M2 puissent de nouveau fournir leur part de puissance non propulsive 2P_{MA} en mode AEO, la fonction d'urgence, soit automatiquement soit sur demande du pilote, ajuste à nouveau la fourniture de puissance non propulsive sur les moteurs principaux et le groupe GPP. Ce groupe GPP passe alors, à cet instant t₇, en régime nominal RA de fourniture de puissance et la puissance fournie par ce groupe redescend au niveau P_{GA}.

Le diagramme de la figure 4 correspond au cas d'urgence illustré par la figure 3 mais où la tentative de redémarrage du moteur défaillant M1 échoue. Les signes de référence de la figure 4 renvoient alors aux parties de la description se référant à la figure 3. Dans le cas alternatif de la figure 4, le moteur survivant M2 repasse en fourniture de puissance non propulsive nominale P_{MA} lorsque le pilote estime, à compter d'un instant t₈, que les conditions de vol le permettent. Le groupe GPP passe alors simultanément à cet instant t₈ en régime d'urgence intermédiaire RI de puissance P_{IU}, correspondant au niveau de puissance que le groupe GPP est capable de fournir jusqu'à la fin du vol.

La figure 4 illustre également un diagramme de gestion des puissances non propulsives P lors de la régulation d'urgence selon un mode R3 correspondant à la défaillance simultanée des deux moteurs M1 et M2. Un signal d'urgence « S », élaboré par la fonction d'urgence et émis à l'instant t₀ par l'unité de traitement du centre de contrôle, est reçu par le FADEC du groupe GPP.

Dans ce cas, toute la puissance non propulsive est fournie par le groupe GPP comme dans le cas précédent. A réception du signal d'urgence « S », toute la puissance non propulsive P_{T} consommée est générée par le groupe GPP par accélération de son générateur de gaz jusqu'à atteindre le niveau de régime maximal d'urgence RM de puissance P_{MU}. Le groupe GPP est alors apte à compenser la défaillance des moteurs M1 et M2. Dans ces conditions, toute la puissance non propulsive P_{T} est fournie par la puissance P_{G} du groupe GPP à compter de l'instant t₃, à un niveau sensiblement égal au niveau nominal P_{TA}.

Après la durée de fonctionnement à ce régime maximal d'urgence RM, qui peut être réduite ou même supprimée s'il faut redémarrer un moteur au plus vite, le pilote commande à l'instant t₅ une tentative de redémarrage d'un moteur, par exemple du moteur M2, au centre de contrôle. L'unité de traitement de ce centre demande alors au FADEC du groupe GPP de passer en mode de démarrage du moteur M2. Le groupe GPP accélère alors davantage son générateur de gaz pour disposer alors de la puissance de super-urgence P_{SU}, comprenant la puissance nécessaire au redémarrage et la puissance pour fournir toute la puissance non propulsive au niveau nominale P_{TA}. Deux situations sont alors gérées, selon que le moteur M2 redémarre ou pas.

Le diagramme de la figure 4 correspond au cas où le moteur défaillant M2 redémarre suite à la tentative. Après avoir exploitée toute la puissance nécessaire au redémarrage, le groupe GPP repasse à compter de l'instant t₆ en régime maximal d'urgence RM correspondant à la puissance P_{MU}, tant que le moteur M2 ne fournit pas de puissance non propulsive.

Lorsque les conditions de vol le permettent, le pilote décide à l'instant t₇ de ne plus délester le moteur M2. La fonction d'urgence du centre de contrôle avion 200 permet alors au moteur M2 de fournir de nouveau sa part de puissance non propulsive P_{MA}. Et le groupe GPP ralentit son générateur de gaz simultanément à cet instant t₇ en régime intermédiaire RI de puissance P_{IU}, de sorte que la puissance non propulsive totale P_{T} conserve sensiblement le niveau nominal P_{TA}.

La puissance P_{IU} prend en charge la fraction de puissance non propulsive que le groupe GPP est capable de fournir jusqu'à la fin du vol. Cette puissance P_{IU} reste supérieure à la puissance du niveau nominal P_{GA}, afin de compenser l'absence de fourniture de puissance non propulsive par le moteur défaillant M1.

Le diagramme de la figure 5 reprend celui de la figure 4 mais correspond au cas alternatif où le moteur défaillant M2 ne redémarre pas lors de la tentative, les deux moteurs restants défaillants. Dans ce cas, à l'issue de l'exploitation du régime de super-urgence RS, le groupe GPP revenu en régime RM de puissance maximale P_{MU} à compter de l'instant t₆, reste à ce régime RM jusqu'à épuisement de la durée impartie à ce régime. Ensuite, à l'instant t₉, la fonction d'urgence réduit la consommation de puissance non propulsive sur le groupe GPP qui passe, à cet instant-là, en régime RI de puissance intermédiaire d'urgence P_{IU} en réduisant la fourniture en puissance non propulsive en conséquence.

L'unité de traitement prend en compte les informations d'atteinte de limite des durées - x, y et z - des régimes RS, RM et RI. Ces informations sont fournies par le FADEC du groupe GPP et la fonction d'urgence du centre de contrôle avion 200 réduit alors la consommation de puissance du groupe GPP aux instants appropriés - ici à l'instant t₉ - par exemple conformément aux priorités fournies ci-dessus, en basculant d'un régime à l'autre à ces instants.

Afin d'augmenter la fourniture en puissance non propulsive, l'aéronef est équipé d'une turbine à air dynamique de type RAT. Il s'agit d'une petite turbine ou « micro-éolienne » connectée à une pompe hydraulique ou à un générateur électrique.

L'invention n'est pas limitée aux exemples décrits et représentés. Il est par exemple possible de prévoir d'autres scénarii, qui combineraient par exemple totalement ou en partie les régulations R1 à R3 exposées ci-dessus. De plus, d'autres régimes de suppléments de puissance fournis par le groupe GPP peuvent être définis, par exemple en prévoyant plusieurs niveaux de puissance intermédiaires.

## Revendications

1. Procédé de régulation de puissance en cas de défaillance d'au moins un moteur (M1, M2) d'un aéronef comportant une unité de traitement numérique de données centrale (100) délivrant une fonction d'urgence apte à déclencher un signal d'urgence (S), **caractérisé en ce que** le procédé consiste, à l'aide d'un groupe de puissance principale de classe moteur dit GPP (700) géré par une fonction de contrôle et de surveillance et fonctionnant en permanence en vol en prenant en charge une partie (P_{GA}) de la puissance non propulsive totale nominale (P_{TA}) de l'aéronef, à accroître ses limites de fonctionnement sur réception du signal d'urgence (S) pour pouvoir fournir quasi instantanément des puissances non propulsives augmentées (P_{SU}, P_{MU}, P_{IU}) selon au moins trois régimes d'urgence (RS, RM, RI) lors de ladite défaillance moteur en réponse à des consommations supplémentaires prélevées sur le GPP (700), chaque régime d'urgence disposant d'une durée maximale d'intervention reportable d'un régime sur l'autre et pouvant être répartie en plusieurs séquences alternées, **en ce que** ces régimes comprennent au moins, classés selon un ordre de niveau de puissance décroissant, un régime dit de super-urgence (RS) de prise en charge de tout ou partie de la puissance non propulsive augmentée d'un surcroît de puissance pour tenter le redémarrage du moteur (M1, M2) défaillant, un régime dit d'urgence maximale (RM) de prise en charge de tout ou partie de la puissance non propulsive, et un régime dit intermédiaire d'urgence (RI) de prise en charge d'une fraction minimale de puissance non propulsive correspondant au reste de puissance disponible en continu jusqu'à la fin du vol, **en ce que** la fonction de contrôle et surveillance du GPP (700) compte le temps écoulé pour chaque régime d'urgence (RS, RM, RI), en informe l'unité de traitement centrale (100) en liaison avec une émission d'alerte en cas de dépassement des durées maximales de fonctionnement (xₘₐₓ, yₘₐₓ, zₘₐₓ) allouées à chaque régime d'urgence (RS, RM, RI), et **en ce que** la fonction d'urgence ajuste les prélèvements de puissance non propulsive de l'aéronef entre les moteurs principaux (M1, M2) et le groupe GPP (700) soit automatiquement soit par un ordre pilote, en fonction de ces informations de temps de régime écoulé et d'avertissement de dépassement de limite d'utilisation d'un régime d'urgence.

2. Procédé de régulation selon la revendication 1, dans lequel le régime de super-urgence (RS) n'est atteint qu'en phase de tentative de redémarrage d'un moteur (M1, M2) tout en fournissant simultanément tout ou partie de la puissance non propulsive de l'aéronef, le régime d'urgence maximale (RM) est atteint en cas de défaillance d'un ou de plusieurs moteurs (M1, M2) tout en fournissant simultanément tout ou partie de la puissance non propulsive de l'aéronef, et le régime intermédiaire d'urgence (RI) n'intervient qu'en phase de maintien d'une fraction de la puissance non propulsive totale (P_{T}) en cas de défaillance définitive d'au moins un moteur (M1, M2) pendant une durée de fin de vol, en délestant au maximum le ou les moteurs restés opérationnels.

3. Procédé de régulation selon la revendication 1 ou 2 dans lequel, en cas de défaillance d'un seul (M1) des moteurs (M1, M2) d'un aéronef qui fournissent de la puissance non propulsive lorsqu'ils sont opérationnels, un mode de régulation (R1) consiste à ne solliciter que le régime intermédiaire d'urgence (RI) du groupe GPP (700) pour compenser l'absence de contribution du moteur défaillant (M1) alors que le(s) moteur(s) opérationnel(s) (M2) n'est (ne sont) pas délesté(s) de sa (leur) contribution à la puissance non propulsive totale (P_{TA}).

4. Procédé de régulation selon l'une des revendications 1 ou 2, dans lequel, en cas de défaillance d'un seul (M1) des moteurs (M1, M2) d'un aéronef qui fournissent de la puissance non propulsive lorsqu'ils sont opérationnels, un mode de régulation (R2) consiste à solliciter trois régimes (RS, RM, RI) successivement et alternativement avec le délestage du (des) moteur(s) opérationnel(s) (M2) de sa (leur) contribution à la puissance non propulsive tant que le moteur défaillant (M1) n'a pas redémarré, à savoir une séquence alternative de régime d'urgence maximale (RM) avec une prise en charge au moins partielle de la puissance non propulsive (P_{T}), suivie d'une demande de puissance correspondant au régime de super-urgence (RS) lors d'une tentative de redémarrage du moteur défaillant (M1) pendant au plus toute la durée disponible dédiée à ce régime, avant de revenir au régime d'urgence maximale (RM) avec une même prise en charge totale de la puissance non propulsive, ce dernier régime pouvant durer jusqu'à épuisement de la durée disponible dédiée à ce régime.

5. Procédé de régulation selon la revendication précédente, dans lequel, en cas de redémarrage du moteur défaillant (M1), la fonction d'urgence ajuste la puissance non propulsive entre les deux moteurs (M1, M2) et le groupe GPP (700) qui fonctionnent à nouveau au régime nominal de puissance non propulsive rétabli jusqu'à la fin du vol, avec une partie déterminée (P_{GA}) de cette puissance fournie par le groupe GPP et la partie complémentaire (2P_{TA}) fournie par les deux moteurs (M1, M2).

6. Procédé de régulation selon la revendication 4, dans lequel, en cas de non redémarrage du moteur défaillant (M1), la fonction d'urgence stoppe le délestage du moteur opérationnel (M2), rétablissant alors sa contribution (P_{MA}) à la puissance non propulsive, soit automatiquement en fonction des données de vol soit sur ordre du pilote (900) s'il estime que les conditions de vol le permettent, et sollicite le groupe GPP au régime intermédiaire d'urgence (RI) jusqu'à la fin du vol.

7. Procédé de régulation selon la revendication 4, dans lequel, en cas de défaillance de deux moteurs (M1, M2), un mode de régulation (R3) de la fonction d'urgence consiste à solliciter la séquence alternative faisant intervenir le régime d'urgence maximale (RM), suivi du régime de super-urgence (RS) lors de la tentative de redémarrage d'un moteur (M2), avant de revenir au régime d'urgence maximale (RM).

8. Procédé de régulation selon la revendication précédente, dans lequel, en cas de redémarrage du moteur (M2) la fonction d'urgence réoriente, soit sur ordre du pilote (900) s'il estime que les conditions de vol le permettent, soit automatiquement en fonction des données de vol, une partie des consommateurs vers le moteur redémarré (M2) qui fournit sa part de puissance non propulsive (P_{MA}) et une autre partie des consommateurs vers le groupe GPP (700) qui opère au régime d'urgence intermédiaire (RI) jusqu'à la fin du vol.

9. Procédé de régulation selon la revendication 7, dans lequel, si le moteur (M2) ne redémarre pas suite à la tentative, le régime d'urgence maximale (RM) est sollicité jusqu'à épuisement de sa durée d'intervention (yₘₐₓ), puis la demande en puissance non propulsive est réduite par la fonction d'urgence afin de passer en régime d'urgence intermédiaire (RI).

10. Système de régulation de puissance en cas de défaillance d'au moins un moteur d'aéronef (M1, M2), comportant un centre de contrôle de vol dit contrôle avion (200) équipé d'une unité de traitement numérique de données (100), un module de maintenance de l'aéronef (950) et des modules de contrôle et de surveillance dit FADEC (800, 300, 400) d'un groupe GPP (700) et des moteurs (M1, M2), **caractérisé en ce que** le FADEC (800) du groupe GPP (700) est équipé de compteurs de temps d'écoulement (801) de régimes d'urgence (RS, RM, RI) déclenchés par une fonction d'urgence de l'unité de traitement (100) qui ajuste la fourniture de puissances non propulsives (P_{G}, P_{M}) par le groupe GPP (700) et les moteurs (M1, M2) via leurs FADEC (800, 300, 400), **en ce que** des liaisons bidirectionnelles (L) relient le centre de contrôle avion aux FADEC (800, 300, 400) et de ces FADEC au groupe GPP (700) et aux moteurs (M1, M2), afin d'être aptes à gérer la demande des consommateurs en fonction desdits temps d'écoulement et des informations (I) sur l'état des moteurs (M1, M2) et du groupe GPP (700), fournies par les FADEC (800, 300, 400) au module de maintenance (950) et au pilote (900) via l'unité de traitement (100), en particulier par la mise en oeuvre du procédé selon l'une quelconque des revendications précédentes.

## Patentansprüche

1. Verfahren zur Leistungssteuerung im Fall des Ausfalls von mindestens einem Motor (M1, M2) eines Flugzeugs mit einer zentralen, digitalen Verarbeitungseinheit für Daten (100), die eine Notfallfunktion liefert, die eingerichtet ist, um ein Notfallsignal (S) auszulösen, **dadurch gekennzeichnet, dass** das Verfahren darin besteht, mit Hilfe einer Hauptleistungsgruppe der Motorklasse, die GPP (700) genannt wird, die von einer Steuerungs- und Überwachungsfunktion im Flug gesteuert wird und kontinuierlich funktioniert, indem ein Teil (P_{GA}) der gesamten, nominalen Nichtsantriebsleistung (P_{TA}) des Flugzeugs übernommen wird, seine Funktionsgrenzen auf den Empfang eines Notfallsignals (S) hin zu vergrößern, um fast augenblicklich erhöhte Nichtantriebsleistungen (P_{SU}, P_{MU}, P_{IU}) zumindest gemäß dreier Notfallregimes (RS, RM, RI) während des Motorausfalls als Reaktion auf die zusätzlichen Verbrauche, die von der GPP (700) entnommen werden, zu liefern, wobei jedes Notfallregime über eine maximale Interventionsdauer verfügt, die von einem Regime auf das andere übertragbar ist, und auf mehrere wechselnde Folgen aufgeteilt werden kann, und dass die Regimes, die gemäß einer abfallenden Reihenfolge der Leistungsniveaus klassifiziert sind, zumindest ein Regime, das Supernotfall (RS) genannt wird, das die Gesamtheit oder einen Teil der Nichtantriebsleistung übernimmt, die um einen Zuwachs der Leistung erhöht ist, um den Neustart des ausgefallenen Motors (M1, M2) zu versuchen, ein Regime, das maximaler Notfall (RM) genannt wird, um die Gesamtheit oder einen Teil der Nichtantriebsleistung zu übernehmen, und ein Regime umfassen, das Zwischennotfall (RI) genannt wird, um einen minimalen Teil der Nichantriebsleistung zu übernehmen, der dem Rest der kontinuierlich verfügbaren Antriebsleistung bis zum Ende des Flugs entspricht, dass die Steuerungs- und Überwachungsfunktion des GPP (700) die Zeit misst, die für jedes Notfallregime (RS, RM, RI) verstreicht, die zentrale Verarbeitungseinheit (100) in Verbindung mit einer Aussendung einer Warnung im Fall des Überschreitens der maximalen Funktionsdauern (xₘₐₓ, yₘₐₓ, zₘₐₓ) informiert, die jedem Notfallregime (RS, RM, RI) zugewiesen sind, und dass die Notfallfunktion die Entnahmen der Nichtantriebsleistungen des Flugzeugs zwischen den Hauptmotoren (M1, M2) und der Gruppe GPP (700) entweder automatisch oder auf eine Pilotenanweisung hin als Funktion der Informationen der verstrichenen Zeit des Regimes und der Warnung der Überschreitung der Grenze der Verwendung eines Notfallregimes anpasst.

2. Verfahren zur Steuerung nach Anspruch 1, wobei das Supernotrufregime (RS) nur während der Phase des Versuchs des Neustarts eines Motors (M1, M2) erreicht wird, wobei gleichzeitig die Gesamtheit oder ein Teil der Nichtantriebsleistung des Flugzeugs geliefert wird, wobei das Regime des maximalen Notfalls (RM) im Fall des Ausfallens von einem oder mehreren Motoren (M1, M2) erreicht wird, wobei gleichzeitig die Gesamtheit oder ein Teil der Nichtantriebsleistung des Flugzeugs geliefert wird, und wobei das Zwischennotfallregime (RI) nur während der Phase der Beibehaltung eines Teils der gesamten Nichtantriebsleistung (P_{T}) im Fall des definitiven Ausfallens von zumindest einem Motor (M1, M2) während einer Dauer des Endes des Flugs interveniert, indem der oder die Motoren, die betriebsfähig bleiben, maximal entlastet werden.

3. Verfahren zur Steuerung nach Anspruch 1 oder 2, wobei im Falle eines Ausfalls von einem (M1) der Motoren (M1, M2) eines Flugzeugs, die eine Nichtantriebsleistung liefern, wenn sie betriebsfähig sind, ein Steuermodus (R1) darin besteht, nur das Zwischennotfallregime (RI) der Gruppe GPP (700) in Anspruch zu nehmen, um die Abwesenheit des Beitrags des ausgefallenen Motors (M1) zu kompensieren, während der oder die betriebsfähigen Motoren (M2) nicht von ihrem Beitrag oder Beiträgen der gesamten Nichtantriebsleistung (P_{TA}) entlastet sind.

4. Verfahren zur Steuerung nach einem der Ansprüche 1 oder 2, wobei im Falle eines Ausfalls von einem (M1) der Motoren (M1, M2) eines Flugzeugs, das die Nichtantriebsleistung liefert, während sie betriebsfähig sind, ein Modus der Steuerung (R2) darin besteht, drei Regimes (RS, RM, RI) sukzessiv und alternativ mit der Entlastung des betriebsfähigen Motors (M2) oder der betriebsfähigen Motoren um seinen Beitrag oder seine Beiträge zur Nichtantriebsleistung in Anspruch zu nehmen, so lange der ausgefallene Motor (M1) nicht neu gestartet wird, nämlich eine alternative Folge des maximalen Notfallregimes (RM) unter einer zumindest teilweisen Übernahme der Nichtantriebsleistung (P_{T}) gefolgt von einer Leistungsanfrage, die dem Supernotfallregime (RS) entspricht, während eines Versuchs des Neustartens des ausgefallenen Motors (M1) während zumindest der gesamten verfügbaren Dauer, die diesem Regime zugewiesen ist, vor der Rückkehr in das maximale Notfallregime (RM) mit der gleichen gesamten Übernahme der Nichtantriebsleistung, wobei das letzte Regime bis zur Ausschöpfung der verfügbaren Dauer andauern kann, die dem Regime zugewiesen ist.

5. Verfahren zur Steuerung nach dem vorhergehenden Anspruch, wobei im Falle des Neustarts des ausgefallenen Motors (M1) die Notfallfunktion die Nichtantriebskraft zwischen den beiden Motoren (M1, M2) und der Gruppe GPP (700), die wieder im Nominalregime der Nichtantriebsleistung bis zum Ende des Flugs funktioniert, mit einem vorbestimmten Teil (P_{GA}) dieser Leistung, die von der Gruppe GPP geliefert wird, und einem komplementären Teil (2P_{TA}), der von den zwei Motoren (M1, M2) geliefert wird, anpasst.

6. Verfahren zur Steuerung nach Anspruch 4, wobei, im Fall des Nichtneustarts des ausgefallenen Motors (M1) die Notfallfunktion die Entlastung des betriebsfähigen Motors (M2) stoppt, wobei sein Beitrag (P_{MA}) zu der Nichtantriebsleistung entweder automatisch als Funktion der Flugdaten oder auf Befehl des Piloten (900), wenn er davon ausgeht, dass die Flugbedingungen es zulassen, wiederhergestellt wird, und die Gruppe GPP im Zwischennotfallregime (RI) bis zum Ende des Flugs in Anspruch nimmt.

7. Verfahren zur Steuerung nach Anspruch 4, bei dem im Falle eines Ausfalls der beiden Motoren (M1, M2) ein Steuermodus (R3) der Notfallfunktion darin besteht, die alternative Folge in Anspruch zu nehmen, das maximale Notfallregime (RM) gefolgt von dem Supernotfallregime (RS) während des Versuchs des Neustartens eines Motors (M2) intervenieren zu lassen, bevor in das maximale Notfallregime (RM) wieder eingetreten wird.

8. Verfahren zur Steuerung gemäß dem vorhergehenden Anspruch, bei dem im Falle eines Motorneustarts (M2) die Notfallfunktion entweder auf Befehl des Piloten (900), wenn er davon ausgeht, dass die Flugbedingungen es zulassen, oder automatisch als Funktion der Flugdaten einen Teil der Verbraucher zu dem neu gestarteten Motor (M2), der seinen Teil der Nichtantriebsleistung (P_{MA}) und einen anderen Teil der Verbraucher zu der Gruppe GPP (700) liefert, die im Zwischennotfallregime (RI) bis zum Ende des Flugs betrieben wird, neu orientiert wird.

9. Verfahren zur Steuerung nach Anspruch 7, wobei, wenn der Motor (M2) auf den Versuch hin nicht neu startet, das maximale Notfallregime (RM) bis zur Ausschöpfung seiner Interventionsdauer (yₘₐₓ) in Anspruch genommen wird, wobei später die Nichtantriebsleistungsanforderung durch die Notfallfunktion verringert wird, um in das Zwischennotfallregime (RI) zu übergehen.

10. System zur Leistungssteuerung im Fall eines Ausfalls von mindestens einem Motor des Flugzeugs (M1, M2) mit einem Steuerzentrum des Flugzeugs, das Flugzeugsteuerung (200) genannt wird, die mit einer digitalen Verarbeitungseinheit für Daten (100) ausgerüstet ist, einem Wartungsmodul des Flugzeugs (950) und Steuerungs- und Überwachungsmodulen, die FADEC (800, 300, 400) genannt werden, einer Gruppe GPP (700) und Motoren (M1, M2), **dadurch gekennzeichnet, dass** das FADEC (800) der Gruppe GPP (700) mit Messern für die verstrichene Zeit (801) der Notfallregimes (RS, RM, RI) ausgestattet ist, die von einer Notfallfunktion der Verarbeitungseinheit (100) ausgelöst werden, welche die Lieferung der Nichtantriebsleistungen (P_{G}, P_{M}) durch die Gruppe GPP (700) und der Motoren (M1, M2) über ihre FADEC (800, 300, 400) anpasst, dass die bidirektionellen Verbindungen (L) das Zentrum der Flugzeugsteuerung mit den FADEC (800, 300, 400) und die FADEC mit der Gruppe GPP (700) und den Motoren (M1, M2) verbinden, um eingerichtet zu sein, die Anfrage der Verbraucher als Funktion der verstrichenen Zeiten und der Informationen (I) über den Zustand der Motoren (M1, M2) und der Gruppe GPP (700) auszuführen, die von den FADEC (800, 300, 400) zu dem Wartungsmodul (950) und dem Piloten (900) über die Verarbeitungseinheit (100) insbesondere durch Einsatz eines Verfahrens gemäß einem der vorhergehenden Ansprüche geliefert werden.

## Claims

1. Method for regulating power in the event of the failure of at least one aircraft engine (M1, M2) comprising a central digital data processing unit (100) providing an emergency function capable of triggering an emergency signal (S), **characterised in that** the method consists in using the engine-class main power unit, known as GPP (700), managed by a control and monitoring function and operating constantly in flight, while taking up some (P_{GA}) of the nominal total non-propulsive power (P_{TA}) of the aircraft, to extend its operational limits on receipt of the emergency signal (S) in order to be able to supply increased non-propulsive power (Psu, P_{MU}, P_{IU}) almost instantaneously, on the basis of at least three emergency regimes (RS, RM, RI) at the time of said engine failure in response to increased consumption demands on the GPP (700), each emergency regime having a maximum activation period, which can be carried over from one regime to another and can be distributed over several alternate sequences, **in that** these regimes comprise at least, classified in order of decreasing power level, what is known as a super-emergency regime (RS), where all or some of the non-propulsive power, plus additional power, is taken over in order to attempt to restart the failed engine (M1, M2), what is known as a maximum emergency regime (RM), where all or some of the non-propulsive power is taken over, and what is known as an intermediate emergency regime (RI), where a minimal fraction of non-propulsive power is taken over, corresponding to the power remaining constantly available up to the end of the flight, **in that** the control and monitoring function of the GPP (700) calculates the elapsed time for each emergency regime (RS, RM, RI) and informs the central processing unit (100) thereof, while emitting an alarm if the maximum operating periods (xₘₐₓ, yₘₐₓ, zₘₐₓ) allocated to each emergency regime (RS, RM, RI) are exceeded, and **in that** the emergency function adjusts the non-propulsive power demands made by the aircraft between the main engines (M1, M2) and the GPP unit (700), either automatically or on the orders of the pilot, on the basis of this information about elapsed time in a regime and of a warning that the limit for using an emergency regime has been exceeded.

2. Regulation method according to Claim 1, wherein the super-emergency regime (RS) is reached only in the phase of attempting to restart an engine (M1, M2) while simultaneously supplying all or some of the non-propulsive power of the aircraft, the maximum emergency regime (RM) is reached if one or more engines (M1, M2) has failed, while simultaneously supplying all or some of the non-propulsive power of the aircraft, and the intermediate emergency regime (RI) is activated only in the phase of maintaining a fraction of the total non-propulsive power (P_{T}), in the event that at least one engine (M1, M2) fails completely during an end-of-flight period, by relieving the demands on the remaining operational engines as far as possible.

3. Regulation method according to Claim 1 or 2 wherein, in the event of the failure of just one (M1) of the engines (M1, M2) of an aircraft that supply non-propulsive power when operational, a regulation mode (R1) consists in calling upon only the intermediate emergency regime (RI) of the GPP unit (700), to compensate for the lack of contribution from the failed engine (M1) while the operational engine(s) (M2) is/are not relieved of its/their contribution to the total non-propulsive power (P_{TA}).

4. Regulation method according to one of Claims 1 or 2, wherein, in the event of the failure of just one (M1) of the engines (M1, M2) of an aircraft that provided non-propulsive power when operational, a regulation mode (R2) consists in calling upon three regimes (RS, RM, RI) successively and alternately, with the operational engine(s) (M2) being relieved of its/their contribution to the non-propulsive power until the failed engine (M1) has restarted, i.e. an alternative sequence of maximum emergency regime (RM) where at least some of the non-propulsive power (P_{T}) is taken over, followed by a demand for power corresponding to the super-emergency regime (RS) when an attempt is made to restart the failed engine (M1) for no longer than the whole available period allocated to that regime, before reverting to the maximum emergency regime (RM) with the total non-propulsive power being taken over as before, it being possible for this latter regime to last until the available period allocated to that regime has elapsed.

5. Regulation method according to the preceding claim, wherein, if the failed engine (M1) is restarted, the emergency function adjusts the non-propulsive power between the two engines (M1, M2) and the GPP unit (700), which operate again in the restored nominal non-propulsive power regime until the end of the flight, with a given portion (P_{GA}) of that power supplied by the GPP unit and the additional portion (2P_{TA}) supplied by the two engines (M1, M2).

6. Regulation method according to Claim 4, wherein, if the failed engine (M1) does not restart, the emergency function stops relieving the demands on the operational engine (M2), restoring its contribution (P_{MA}) to the non-propulsive power at that time, either automatically on the basis of the flight data or on the orders of the pilot (900) if he considers that the flight regimes so permit, and calls upon the GPP unit in the intermediate emergency regime (RI) until the end of the flight.

7. Regulation method according to Claim 4, wherein, if two engines (M1, M2) have failed, a regulation mode (R3) of the emergency function consists in calling upon the alternative sequence, activating the maximum emergency regime (RM), followed by the super-emergency regime (RS) while an attempt is made to restart the engine (M2), before returning to the maximum emergency regime (RM).

8. Regulation method according to the preceding claim, wherein, if the engine (M2) is restarted, and either on the orders of the pilot (900) if he considers that the flight regimes so permit, or automatically on the basis of the flight data, the emergency function diverts some consumers to the restarted engine (M2), which supplies its share of non-propulsive power (P_{MA}), and other consumers to the GPP unit (700), which operates in the intermediate emergency regime (RI) until the end of the flight.

9. Regulation method according to Claim 7, wherein, if the engine (M2) does not restart after the attempt, the maximum emergency regime (RM) is called upon until its activation period (yₘₐₓ) has elapsed, then the demand for non-propulsive power is reduced by the emergency function so as to switch to the intermediate emergency regime (RI).

10. System for regulating power in the event of the failure of at least one aircraft engine (M1, M2), comprising a flight control centre known as an aircraft control (200), equipped with a digital data processing unit (100), an aircraft maintenance module (950), and control and monitoring modules known as FADEC (800, 300, 400) for a GPP unit (700) and for the engines (M1, M2), **characterised in that** the FADEC (800) of the GPP unit (700) is equipped with elapsed time counters (801) for the emergency regimes (RS, RM, RI) triggered by an emergency function of the processing unit (100), which adjusts the supply of non-propulsive power (P_{G}, P_{M}) by the GPP unit (700) and the engines (M1, M2) via their FADECs (800, 300, 400), **in that** bidirectional links (L) connect the aircraft control centre to the FADECs (800, 300, 400) and these FADECs to the GPP unit (700) and to the engines (M1, M2), so that they can manage the demand from the consumers on the basis of said elapsed times and the information (I) on the state of the engines (M1, M2) and the GPP unit (700), supplied by the FADECs (800, 300, 400) to the maintenance module (950) and to the pilot (900) via the processing unit (100), in particular by implementing the method according to any one of the preceding claims.
